# EUROPÄISCHE PATENTSCHRIFT

(11) **EP 1 943 042 B1**
(45) Veröffentlichungstag und Bekanntmachung des Hinweises auf die Patenterteilung: **23.03.2011**
(21) Anmeldenummer: 06806609.1
(22) Anmeldetag: 30.10.2006
(51) Int. Cl.: B23B 29/034, B23Q 1/70, B23Q 5/04, B24B 41/04, B24B 49/14

(54) **VERFAHREN UND VORRICHTUNG ZUR FINISHBEARBEITUNG VON BOHRUNGEN**
METHOD AND DEVICE FOR THE FINISH MACHINING OF BORES
PROCEDE ET DISPOSITIF DE FINITION D'ALESAGES

(30) Priorität: 29.10.2005 DE 102005051909
(43) Veröffentlichungstag der Anmeldung: 16.07.2008
(73) Patentinhaber: NILES-SIMMONS Industrieanlagen GmbH, 09117 Chemnitz (DE)
(72) Erfinder: NAUMANN, Hans, J., 09117 Chemnitz (DE); BUDIG, Klaus-Peter, 09120 Chemnitz (DE); KÜCHLER, Dietmar, 09120 Chemnitz (DE); MEHNERT, Jens, 08468 Heinsdorfergrund/OT Hauptmannsgrün (DE)
(74) Vertreter: Grättinger Möhring von Poschinger Patentanwälte Partnerschaft
(86) Internationale Anmeldenummer: PCT/EP2006/010413
(87) Internationale Veröffentlichungsnummer: WO 2007/048637

(56) Entgegenhaltungen:
- EP-A2- 0 364 993
- DE-A1- 4 000 025
- DE-B3- 10 308 442

## Beschreibung

Die Erfindung betrifft ein Verfahren zur Finishbearbeitung von Zylinderbohrungen durch spanabhebende Bearbeitung auf einer Werkzeugmaschine, die einen Werkzeugsupport aufweist, der in der Vorschubrichtung bewegbar ist. Weiterhin betrifft die Erfindung ein Verfahren zur spanenden Finishbearbeitung von Bohrungen mit geometrisch definierter Werkzeugschneide sowie eine Werkzeugmaschine zur Finishbearbeitung von Zylinderbohrungen durch spanabhebende Bearbeitung mit einem Schneidwerkzeug mit geometrisch bestimmter Schneide.

Für die Finishbearbeitung kommen Zylinderbohrungen in Motorblöcken im Automobilbau, Bohrungen von Hydraulikzylindern und im Verdichterbau in Betracht. Derartige Zylinderbohrungen zeichnen sich durch einen geringen Durchmesser im Vergleich zu einer großen Länge aus. Entsprechend diesen geometrischen Verhältnissen und im Hinblick auf die geforderte Formgenauigkeit werden an die Finishbearbeitung von derartigen Zylindern hohe Anforderungen gestellt.

Üblicherweise erfolgt die Endbearbeitung von Zylinderbohrungen durch Honen. Hierdurch erhalten die Zylinderbohrungen ihre Endmaße, ihre Formgenauigkeit und die Oberflächenstrukturierung zur Ölhaltung in Form einer "Kreuz-Riefen-Strukturierung". Im derzeitigen Stand der Technik finden demnach zur Finishbearbeitung von Zylinderbohrungen Schleifkörper mit nicht definierter Schneide in Form von Honwerkzeugen Verwendung, wodurch beim Honvorgang Materialverschiebungen in den bearbeiteten Bohrungen entstehen und alle bearbeitungsrelevanten Werkzeugbewegungen durch die Ansteuerung der Maschinenachsen erfolgen. Dabei ist der unerwünschte Effekt festzustellen, dass an die Oberfläche führende Graphitlamellen, welche zur reibungsarmen Führung eines Kolbens in der Bohrung vorhanden sind, zugeschmiert werden, da Materialaufwürfe und Flitterbildung entstehen. Solche Oberflächen zeichnen sich durch einen geringen Flächentraganteil aus und führen im Betrieb einer Hubkolbenmaschine zu einem hohen Ölverbrauch und in der Folge zu einem hohen Verschleiß. Verschleiß bedeutet aber übermäßige Verunreinigung des Öls und erhöhte Reibungsverluste.

Beim Zusammenbau von Verbrennungsmotoren treten außerdem am Motorblock Spannungen auf, welche durch die Montage des Zylinderkopfes in den Motorblock eingetragen werden. Diese Spannungen können dazu führen, dass die Querschnittsform des Zylinders von der idealen Kreisform abweicht und andere geometrische Konfigurationen einnimmt, welche, abweichend von der idealen Kreisform, im Bereich von 10⁻³ mm liegen. Beim an sich üblichen Honen der Zylinderbohrungen wird diesen Verformungen dadurch Rechnung getragen, dass man vor dem Honen eine Brille auf den Motorblock aufschraubt und dadurch die zu erwartenden Spannungen der Endmontage in den Motorblock einträgt. Im Ergebnis erhält der Motorblock dadurch die gewünschte Sollform.

Untersuchungen haben ergeben, dass bei den klassisch gehonten Zylinderbohrungen, wie sie im Bau von Verbrennungsmotoren üblich sind, bei deren Betrieb ein beachtliches Ölvolumen erforderlich ist, so dass der Topring auf der freien Zylinderfläche eine erhebliche Restölmenge zurücklässt. Dies ist ein Indikator für den Ölverbrauch der Maschine. Wegen der thermisch isolierenden Wirkung des Ölfilms steigt dadurch die Oberflächentemperatur im Zylinder an. Mit der steigenden Oberflächentemperatur steigt wiederum der Verdampfungsanteil des Öles an. Eine hohe Betriebstemperatur eines Verbrennungsmotors erfordert zugleich auch eine hohe Kühlleistung, was den Wirkungsgrad der Maschine verringert.

Aus der DE 4000025 C2 ist eine Vorrichtung zur spanabhebenden Bearbeitung von von der genauen Zylinderform geringfügig abweichenden Werkstücken bekannt. Hierdurch ist ein Verfahren bekannt, welches einen funktionellen Zusammenhang zwischen Relativverschiebung und -verdrehung bezüglich Werkstück und Werkzeug und Ausgangsdruck des Druckgebers und damit Ansteuerdruck der Druckflüssigkeitskammer mit einer Reproduzierbarkeit von 1 bis 2 µm gewährleistet, wobei die Güte der Bearbeitung von der Arbeitsgenauigkeit des Weg- und Winkelmeßsystems bestimmt ist. Der Vorrichtungsaufbau wird derart beschrieben, dass ein Schneidmeißelhalter eine Schneidenhalterstange aufweist, welche federnd an ein Trägerteil angelenkt ist, so dass ein Parallelfedergelenk zwischen Schneidenhalterstange und Trägerteil gebildet wird. In Abhängigkeit vom Steuerdruck werden die Schneidenhalterstange und damit die Schneide ausschließlich in radialer Richtung um Beträge von bis zu 0,5 mm ausgelenkt. Die bekannte Vorrichtung beschreibt ein gekoppeltes hydraulisch-mechanischelektrisches System, welches dazu geeignet ist, über das Trägerteil und die Schneidenhalterstange Schnittkräfte auf das Schneidwerkzeug zu übertragen. Systembedingt zeichnet sich diese Vorrichtung durch eine hohe mechanisch-hydraulische Trägheit in Verbindung mit vielfältigen Stellgliedern aus und ist nicht in der Lage, eine effektive Bearbeitung mit geringen Schnittkräften bei hohen Schnittgeschwindigkeiten zu sichern, insbesondere unter Beachtung der beschriebenen Weg- und Winkelmeßsysteme.

Die deutsche Patentschrift 10308442 befasst sich mit der Herstellung von nicht-zylindrischen Bohrungen (sog. "Formbohrungen"), deren Querschnitt sich in axialer Richtung der Bohrung ändern kann, wie dies beispielsweise auf Kolbenbolzenbohrungen zutrifft. Im Rahmen der Erörterung des für die Herstellung solcher Formbohrungen maßgeblichen apparativen Standes der Technik werden auch Werkzeugmaschinen erwähnt, die eine magnetisch gelagerte Spindel aufweisen, an der ein spanabhebendes Werkzeug angeordnet ist. Solche bekannten Maschinen werden allerdings als nachteilig angesehen, weil sich mit ihnen "sehr enge Bearbeitungstoleranzen insbesondere bei der Bearbeitung von Bohrungen mit großer Bohrtiefe nur schwer einhalten lassen". Zur Lösung der vor diesem Hintergrund formulierten Aufgabenstellung, wonach eine Vorrichtung zum spanabhebenden Bearbeiten einer Bohrung zu schaffen ist, welche Formbohrungen mit unrundem Querschnitt und großer Bohrtiefe mit hoher Präzision ermöglicht, wobei auch eine Änderung der Querschnittsform in Achsrichtung der Bohrung möglich sein soll, lehrt die betreffende Entgegenhaltung, dass das Werkzeug auf der der Spindel entgegengesetzten Seite des Werkstücks durch eine magnetische Gegenhalterung zu lagern ist. Die technische Lehre der Entgegenhaltung D1 geht gemäß den weiteren Erläuterungen somit dahin, das Werkzeug beiderseits der Anfriffsstelle an dem Werkstück radial magnetisch zu lagern, wodurch sich eine gute Abstützung sowohl der Werkzeugmasse als auch der Bearbeitungskräfte ergibt.

Eine Werkzeugspindel, die motorisch antreibbar und drehbar in einem Gehäuse magnetisch gelagert ist, ist aber auch aus der DE 69532125 T2 bekannt. Die bekannte Spindel ist mit einem Kühl- und Arbeitsfluidkanal versehen, der sich axial durch die Spindel erstreckt. Im Einzelnen geht es hier um die Ausgestaltung der Zu- und Durchleitung des Kühl- und Arbeitsfluids durch die magnetisch gelagerte Spindel zur Kühlung und Schmierung des im Eingriff befindlichen Werkzeugs. Die Steuerung der Spindel wird in der Übersetzung der europäischen Patentschrift nicht näher beschrieben und auch nicht in der Aufgabenstellung der Erfindung benannt.

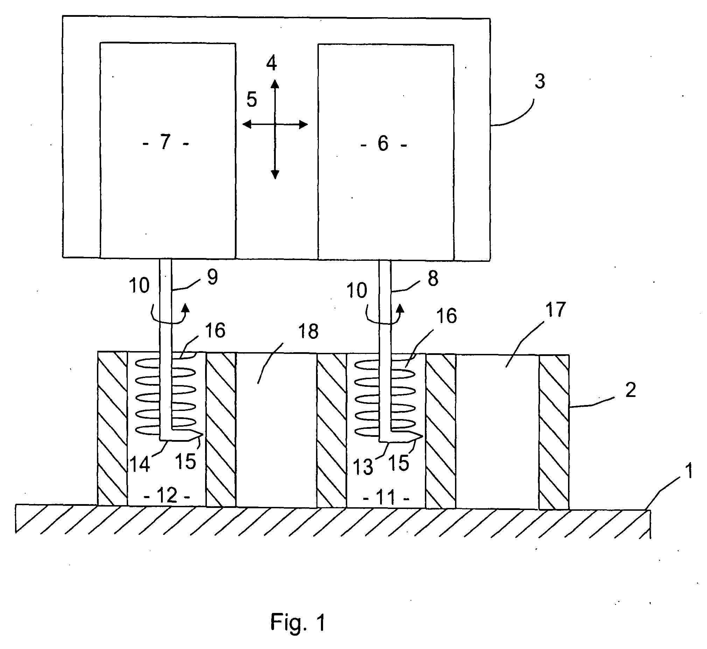

Magnetisch gelagerte Werkzeugspindeln sind an sich aus der EP 0364993 A2 bekannt. Dort sind der Aufbau und die Wirkungsweise einer Magnetspindellagerung ausführlich beschrieben (vgl. Fig.1 sowie Spalte 1 Zeile 10 bis Spalte 2 Zeile 22).

Weiterhin geht aus der DE 4227015 A1 eine Möglichkeit zur Regelung der Bewegung von Werkzeugspindeln hervor. Die Magnetlager sind zur Achse des Rotors paarweise diametral gegenüber auf zwei sich kreuzenden radialen Achsen angeordnet. Der Regelvorgang zur radialen Verlagerung der Rotorachse wiederholt sich innerhalb einer Rotorumdrehung in Abhängigkeit von dessen Masse, dessen Drehzahl und der Größe des ermittelten Fehlers mehrmals. Im Allgemeinen bewegt sich die geometrische Rotorachse auf einer Bahn, die im Wesentlichen eine Kreisbahn darstellt. Deren Mittelpunkt entspricht ungefähr der Schwerachse des Rotors. Über steuerungstechnisch gekoppelte Ausführungsformen derartiger Magnetspindeln mit Maschinensteuerungen in Form einer hybriden Steuerungsmethodik zur Finishbearbeitung von Bohrungen mit Hilfe redundanter Achsen werden in keiner Schrift Aussagen getroffen.

An Werkzeugmaschinen ist es üblich, für die Herstellung von Werkstücken - beispielsweise Kolben für Verbrennungsmotoren - die nur in geringem Maß von der idealen kreisrunden Form abweichen, als Rotoren rotierende Werkzeuge vorzusehen, die quer zu ihrer Längsachse eine kleine Versatzbewegung ausführen. Es ist aber auch zu berücksichtigen, welche Lage der Rotor - beispielsweise ausgebildet als Werkzeugspindel - im Verhältnis zu einem ortsfesten Werkstück innerhalb einer Umdrehung einnehmen muss.

Um die weiter oben aufgeführten Nachteile zu vermeiden, die an den Oberflächenstrukturen von Zylinderbohrungen durch Honen entstehen, werden "Mikrohydrodynamikstrukturen" angestrebt, wie sie sich durch offene Graphitausscheidungen an der Zylinderlaufbahnoberfläche darstellen. Darin besteht eine Aufgabe der vorliegenden Erfindung. Zugleich wird eine hohe maßliche Genauigkeit des endbearbeiteten Zylinders angestrebt. Schließlich sollen neben der Kreisform des Zylinderquerschnitts auch noch andere geometrische Konfigurationen möglich sein, beispielsweise Ovale oder Polygone. Die Abweichungen von der idealen Kreisform liegen im Größenbereich zwischen 10⁻² bis 10⁻³ mm. Weiterhin ergibt sich eine Aufgabe für die vorliegende Erfindung, ein Verfahren zur spanenden Finishbearbeitung von Bohrungen mithilfe von magnetisch gelagerten und motorisch antreibbaren Werkzeugspindeln sowie Werkzeugen mit geometrisch definierter Schneide vorzuschlagen, welches die weiter unten benannten Vorteile hat.

Die Lösung dieser Aufgabenstellung erfolgt erfindungsgemäß durch das in Anspruch 1 angegebene Verfahren und die in Anspruch 2 angegebene Werkzeugmaschine. Es wurde gefunden, dass man eine hochgenaue Finishbearbeitung von Zylinderbohrungen mit den Vorteilen guter Gleiteigenschaften erzielen kann, wenn man die Finishbearbeitung mit einem Schneidwerkzeug vornimmt, das eine geometrisch bestimmte Schneide aufweist und am äußeren Ende einer Werkzeugspindel vorgesehen ist. Diese Spindel ist in der in den genannten Ansprüchen näher bestimmten Weise motorisch antreibbar drehbar in einem Gehäuse magnetisch gelagert. Sie ist auf dem Werkzeugsupport der Werkzeugmaschine befestigt. Mit Hilfe dieser Einrichtung kann man die Bewegung des Schneidwerkzeugs in einer Richtung orthogonal zur Vorschubrichtung in die Werkzeugspindel verlagern. Die orthogonale Bewegung der Werkzeugspindel erfolgt über die magnetische Lagerung.

Falls das Werkzeug, welches am Ende der Werkzeugspindel angeordnet ist, bei einem derartigen Arbeitsvorgang erfassbare Schnittkräfte aufbringen muss, die eine definierte Größe und Richtung haben, kann man auch diese Kräfte in einem Regelungsprogramm zu ihrer Kompensation berücksichtigen. Aufgrund der Tatsache, dass geforderte Lagekorrekturen der geometrischen Werkzeugspindelachse nur im Bereich von Bruchteilen von Millimetern erforderlich sind, reicht die Toleranz zwischen minimalem und maximalem Luftspalt in den aktiven Magnetlagern des Rotors aus, diese Korrekturen ohne zusätzliche Antriebe für einen oder mehrere Supporte, die senkrecht zur Vorschubbewegung wirken, anzuordnen. Im Klartext heißt das, dass man die Bewegung des Schneidwerkzeugs in einer Richtung orthogonal zur Vorschubrichtung vom Werkzeugsupport in die Spindel verlagert.

Zur Regelung der Lage der Werkzeugspindel werden kombinierte Arbeitsprogramme bevorzugt. Unter kombinierten Programmen werden solche Programme verstanden, die einen ersten Teil haben, der einmal die Lagerkräfte auf die Position der geometrischen Achse der Werkzeugspindel orientiert, die sie bei freier Rotation um die Schwerachse einnehmen würde, und steuert und andererseits einen zweiten Anteil aufweist, der aktive Versatzbewegungen der Werkzeugspindel zum Zwecke der Ausführung von Arbeitsfunktionen auslöst. Beide Teile des kombinierten Arbeitsprogramms sind dabei einander überlagert.

Demnach kann eine Werkzeugspindel einerseits sehr hochtourig angetrieben werden und zusätzlich, entsprechend einem Arbeitsprogramm, quer zu ihrer Längsachse innerhalb der Luftspalttoleranzen der magnetischen Lagerung bewegt werden. Das kombinierte Arbeitsprogramm kann sogleich, soweit definiert erfassbar, auch die auftretenden Schnittkräfte mit berücksichtigen.

Unter der Voraussetzung, dass die Werkzeugspindel auch bei magnetischer Lagerung eine hohe Eigensteifigkeit und geringe Neigung zu Schwingungen aufweist, ergeben sich bei der Finishbearbeitung mit einem Schneidwerkzeug mit geometrisch bestimmter Schneide besondere Vorteile:
- Kohlenstoffeinschlüsse in der Zylinderwand werden freigelegt, es können sich Öltaschen bilden und der Ölverbrauch der Hubkolbenmaschine sinkt,
- die Schmierungsverhältnisse an den Bohrungsoberflächen werden erheblich verbessert,
- die erforderliche Leistungsaufnahme und damit der Stromverbrauch zum Antrieb der Werkzeugspindel verringert sich,
- durch die Verbesserung der Schmierung von Kolbenringen in den Zylinderbohrungen wird eine wesentliche Reduzierung des Ölverbrauches ermöglicht; das heißt, der tatsächlich Ölverbrauch kann um bis zu 16 Prozent gesenkt werden. In Anbetracht der weltweit betriebenen Anzahl von Kraftfahrzeugen kann durch die Verringerung des Ölverbrauches ein wesentlicher ökologischer Effekt erzielt werden.
- nach Abschluß der Finishbearbeitung wird das Werkzeug radial außer Eingriff genommen und es ist möglich, dieses ohne Beschädigung der bearbeiteten Bohrungsoberfläche und darüber hinaus auch schneller als bisher aus der Bohrung zu entfernen.
- neben der Kreisform des Bohrungsquerschnitts können auch noch andere geometrische Konfigurationen wie Ovale oder Polygone ohne weitere Hilfsmittel oder Vorrichtungen wie zum Beispiel Hohnbrillen im Größenbereich zwischen 10⁻² bis 10⁻³ mm reproduzierbar und effizient gefertigt werden.

Ein weiterer bedeutsamer fertigungstechnischer Vorteil besteht darin, dass man das Schneidwerkzeug am Ende der Finishbearbeitung radial außer Eingriff und somit aus dem Zylinder herausziehen kann, ohne dass auf der Zylinderwand eine Riefe zurückgelassen wird.

Weitere Vorteile des Verfahrens ergeben sich aus den Unteransprüchen.

Schließlich wird eine Werkzeugmaschine zur Finishbearbeitung von Zylinderbohrungen durch spanabhebende Bearbeitung vorgeschlagen, die ein Schneidwerkzeug mit geometrisch bestimmter Schneide aufweist, wobei die Werkzeugmaschine wenigstens einen Werkzeugsupport hat, der in und entgegen der Vorschubrichtung bewegbar ist. Auf dem Werkzeugsupport ist sodann ein Gehäuse fest angeordnet, in welchem eine motorisch antreibbare Werkzeugspindel drehbar magnetisch gelagert ist, an deren äußeren Ende das Schneidwerkzeug angeordnet ist, und Sensoren an den magnetischen Lagern der Werkzeugspindel vorgesehen sind, welche die Raum- und die Drehwinkellage der Werkzeugspindel zu jedem Zeitpunkt erfassen und wo eine Regelung sowie Programmsteuerung an der Werkzeugmaschine vorgesehen ist, über welche die Lage der Werkzeugspindel in der Vorschubrichtung sowie orthogonal dazu beeinflussbar ist.

Bevorzugt wird eine senkrechte Lagerung der Werkzeugspindel wie sie zum Bearbeiten der Zylinder von Reihenmotoren erforderlich ist. Die Motorblöcke von Reihenmotoren haben üblicherweise vier oder mehr Zylinderbohrungen. So ist in Anbetracht der Abmessungen, welche eine magnetisch gelagerte Werkzeugspindel erfordert, vorgesehen, dass mindestens zwei derartige Werkzeugspindeln auf einem Support nebeneinander angeordnet sind. Da darüber hinaus aber auch das Bearbeiten von V-Motoren oder Boxer-Motoren erforderlich sein kann, wird zugleich angestrebt, die magnetisch gelagerten Arbeitsspindeln zur Finishbearbeitung auch in waagerechter und in Arbeitslagen zwischen der senkrechten und der waagrechten Arbeitsstellung zu benutzen. Jede Winkelstellung zwischen der senkrechten und der waagerechten ist bei magnetisch gelagerten Werkzeugspindeln möglich, in dem man die Einflüsse der Schwerkraft durch entsprechende Arbeitsprogramme ausregelt.

Nachdem, wie bereits gesagt, die Finishbearbeitung im Bereich von 10⁻² bis 10⁻³ mm Spantiefe stattfindet, ist es wesentlich, auch dem Werkzeugverschleiß Rechnung zu tragen. Hier ist ein Arbeitsprogramm erforderlich, das aufgrund der Reaktionskräfte, die beim Schneidvorgang an der Werkzeugspindel entstehen, ein Monitoring der Schneidkräfte beinhaltet und entsprechend der Erhöhung der Schnittkraft bei fortschreitendem Verschleiß eine Lageregelung der Werkzeugspindel vornehmen kann.

Beim Zusammenbau von Verbrennungsmotoren treten am Motorblock Spannungen auf, welche durch die Montage des Zylinderkopfes in den Motorblock eingetragen werden. Diese Spannungen können dazu führen, dass die Querschnittsform des Zylinders von der idealen Kreisform abweicht und andere geometrische Konfigurationen einnimmt, welche, abweichend von der idealen Kreisform, im Bereich von 10⁻³ mm liegen. Beim an sich üblichen Hohnen der Zylinderbohrungen wird diesen Verformungen dadurch Rechnung getragen, dass man vor dem Hohnen eine Brille auf den Motorblock aufschraubt, die bereits die Spannungen der Endmontage in den Motorblock einträgt. Im vorliegenden Falle ist das Aufsetzen einer Brille vor der Finishbearbeitung nicht mehr erforderlich. Über eine entsprechende Programmsteuerung können beliebige geometrische Querschnittskonturen am Zylinder erzeugt werden, welche der sich später einstellenden Verformung durch die Montage des Zylinderkopfes entsprechen. Dabei können zugleich auch weitergehende geometrische Abweichungen von der idealen Kreisform berücksichtigt werden, die sich in Abhängigkeit von der Tiefe einstellen, mit welcher die Werkzeugspindel in die Zylinderbohrung eindringt.

Durch das erfindungsgemäße Verfahren wird es möglich, die Finishbearbeitung von Bohrungen mit einem Schneidwerkzeug vorzunehmen, welches eine geometrisch bestimmte Schneide aufweist und am äußeren Ende einer Werkzeugspindel befestigt ist. Diese Werkzeugspindel ist motorisch antreibbar drehbar in einem Gehäuse sowohl radial als auch axial magnetisch gelagert. Die Werkzeugspindel ist auf dem beweglichen Support der Maschine befestigt. Erfindungsgemäß wird die erforderliche Bearbeitungsgenauigkeit durch die Schaffung eines hybriden Steuerungssystems erreicht, welches aus der Maschinensteuerung und dem Lageregler der magnetisch gelagerten Werkzeugspindel besteht. In der Folge wird die verfahrenssichere und hochgenaue Bewegungssteuerung durch Redundanz der Maschinenachsen und der magnetisch gelagerten Werkzeugspindel erreicht. Die zur Finishbearbeitung erforderliche räumlich hochgenaue Werkzeugschneidenpositionierung wird durch Verlagerung der magnetisch gelagerten Werkzeugspindel in ihrer Lagerung gewährleistet. Die dazu erforderliche Verlagerung der magnetisch gelagerten Werkzeugspindel findet ihren Niederschlag in einer umlaufbezogen Änderung der Luftspalte der Magnetlager, was eine Präzisionsausrichtung der Werkzeugschneide bewirkt. Dies erfolgt durch Änderung der Magnetfelder jeweils anforderungsgerecht über den Lagerumfang und/oder in Richtung der Symmetrieachse der magnetisch gelagerten Werkzeugspindel. Die Sollwertvorgabe wird unter Beachtung der im NC-Programm abgebildeten Steuerungsinformationen sowie einer Korrekturwerttabelle durch die Maschinensteuerung dem Lageregler bereitgestellt, welcher die Ist-Werte in Verbindung mit den erfassten Sensorsignalen während des Bearbeitungsprozesses zur separaten Ansteuerung der Magnetfelder der Magnetlager generiert. Mit Hilfe dieses hybriden Steuerungskonzeptes ist durch die magnetisch gelagerte Werkzeugspindel eine In-Prozess-Verstellung der Werkzeugschneide in sechs Freiheitsgraden zur Umsetzung der Finishbearbeitung realisierbar. Die Bemessung der Luftspalte der Magnetlager erfolgt unter Beachtung der zu bearbeitenden Werkstücke, des prognostizierten Maschinen- und Werkzeugverschleißes, der relevanten maximal auftretenden Geometriefehler der Maschine bezüglich der Genauigkeit der Achsenpositionierung sowie weiterer Parameter, beispielsweise thermischer Einflüsse. Die relevanten maximal auftretenden Geometriefehler der Maschine bezüglich der Genauigkeit der Achsenpositionierung werden maschinenabhängig im Vorfeld der Finishbearbeitung ermittelt und zu Toleranzen zusammengeführt, welche den steuerungstechnisch zu beachtenden Geometriefehler der Maschine bezüglich eines Punktes im Raum widerspiegeln. Die maschinensteuerungsseitige Bereitstellung aller Toleranzen übernimmt eine Korrekturwerttabelle. Durch das hybride Steuerungskonzept erfolgt eine Bewegungsteilung zwischen Maschinensteuerung und den dadurch verfahrbaren Achsen zur Gewährleistung der Grundbewegung sowie der Lageregelung zur Präzisionsausrichtung der magnetisch gelagerten Werkzeugspindel. Im üblichen Bearbeitungsfall bewegt sich die geometrische Rotorachse der magnetisch gelagerten Werkzeugspindel auf einer Bahn, welche im Wesentlichen einer durchmesserkonstanten spiralförmigen Bewegung entspricht und mit Hilfe der Maschinensteuerung und den dadurch verfahrbaren Achsen erzeugt wird. Die Steuerung der erforderlichen Schnitttiefe erfolgt überlagert zur Bewegung der Maschinenachsen, dass heißt redundant durch die Lageregelung der magnetisch gelagerten Werkzeugspindelwelle unter Beachtung der technologisch vorgegebenen Schnitttiefe und/oder Vorschub der jeweils zu bearbeitenden Werkstücke, des prognostizierten Maschinen- und Werkzeugverschleißes, der relevanten maximal auftretenden Geometriefehler der Maschine bezüglich der Genauigkeit der Achsenpositionierung sowie weiterer Parameter, beispielsweise thermischer Einflüsse.

Dadurch ist es möglich, auch geringfügig von der idealen Kreisform abweichende Bohrungen herzustellen, indem über die axiale Winkelstellung der magnetisch gelagerten Werkzeugspindel die technologischen Parameter wie Schnitttiefe und Vorschub entsprechend variiert werden.

Falls das Werkzeug, welches am Ende der magnetisch gelagerten Werkzeugspindel angeordnet ist, bei der Bearbeitung erfassbare Schnittkräfte aufbringen muss, die eine definierte Größe und Richtung aufweisen, werden auch diese Kräfte in einem Regelungsprogramm des Lagerreglers zu ihrer Kompensation berücksichtigt. Aufgrund der Tatsache, dass geforderte Lagekorrekturen der geometrischen Werkzeugspindelachse hauptsächlich im Bereich von Bruchteilen von Millimetern erforderlich sind, reicht die Toleranz zwischen minimalem und maximalem Luftspalt in den aktiven Magnetlagern der magnetisch gelagerten Werkzeugspindel aus, die beschriebenen Bewegungen ohne zusätzliche Antriebe für einen oder mehrere Supporte, die senkrecht zur Vorschubbewegung wirken, auszuführen. Im Klartext heißt das, dass die Bewegung des Schneidwerkzeugs in einer Richtung orthogonal zur Vorschubrichtung vom Werkzeugsupport in die magnetisch gelagerten Werkzeugspindel verlagert wird.

Zur Regelung der Lage der Werkzeugspindel werden kombinierte Arbeitsprogramme bevorzugt. Unter kombinierten Programmen werden solche Programme verstanden, die einen ersten Teil haben, der einmal die Lagerkräfte auf die Position der geometrischen Achse der Werkzeugspindel orientiert, die sie bei freier Rotation um die Schwerachse einnehmen würde, und steuert und andererseits einen zweiten Anteil aufweist, der aktive Versatzbewegungen der Werkzeugspindel zum Zwecke der Ausführung von Arbeitsfunktionen auslöst. Beide Teile des kombinierten Arbeitsprogramms sind dabei einander überlagert.

Demnach kann eine Werkzeugspindel einerseits sehr hochtourig angetrieben werden und zusätzlich, entsprechend einem Arbeitsprogramm, quer zu ihrer Längsachse innerhalb der Luftspalttoleranzen der magnetischen Lagerung bewegt werden. Das kombinierte Arbeitsprogramm kann sogleich, soweit definiert erfassbar, auch die auftretenden Schnittkräfte mit berücksichtigen. Zur Verbesserung der Produktivität ist der Einsatz mehrerer magnetisch gelagerter Werkzeugspindeln auf einer Maschine, auch in voneinander abweichenden Einbaulagen bezüglich der geometrischen Rotorachsen der magnetisch gelagerten Werkzeugspindeln, möglich.

Schließlich wird eine Werkzeugmaschine zur Finishbearbeitung von Zylinderbohrungen durch spanabhebende Bearbeitung vorgeschlagen, die ein Schneidwerkzeug mit geometrisch bestimmter Schneide aufweist, wobei die Werkzeugmaschine wenigstens einen Werkzeugsupport hat, der in und entgegen der Vorschubrichtung bewegbar ist. Auf dem Werkzeugsupport ist ein Gehäuse fest angeordnet, in welchem eine motorisch antreibbare Werkzeugspindel drehbar magnetisch gelagert ist, an deren äußeren Ende das Schneidwerkzeug angeordnet ist, und Sensoren an den magnetischen Lagern der Werkzeugspindel vorgesehen sind, welche die Raum- und die Drehwinkellage der Werkzeugspindel zu jedem Zeitpunkt erfassen sowie eine hybride Steuerungseinheit, bestehend aus der Lageregelung sowie der Steuerung der Werkzeugmaschine vorgesehen ist, über welche die Lage der Werkzeugspindel in der Vorschubrichtung sowie orthogonal dazu beeinflussbar ist.

Bevorzugt wird eine senkrechte Lagerung der Werkzeugspindel wie sie zum Bearbeiten der Zylinder von Reihenmotoren erforderlich ist. Die Motorblöcke von Reihenmotoren haben üblicherweise vier oder mehr Zylinderbohrungen. So ist in Anbetracht der Abmessungen, welche eine magnetisch gelagerte Werkzeugspindel erfordert, vorgesehen, dass mindestens zwei derartige Werkzeugspindeln auf einem Support nebeneinander angeordnet sind. Da darüber hinaus aber auch das Bearbeiten von V-Motoren oder Boxer-Motoren erforderlich sein kann, wird zugleich angestrebt, die magnetisch gelagerten Arbeitsspindeln zur Finishbearbeitung auch in waagerechter und in Arbeitslagen zwischen der senkrechten und der waagrechten Arbeitsstellung zu benutzen. Jede Winkelstellung zwischen der senkrechten und der waagerechten ist bei magnetisch gelagerten Werkzeugspindeln möglich, in dem man die Einflüsse der Schwerkraft durch entsprechende Arbeitsprogramme innerhalb des Lagereglers ausregelt.

Da die Finishbearbeitung mit geringen Spantiefen stattfindet, ist es für einen wirtschaftlichen Bearbeitungsprozess wesentlich, auch dem Werkzeugschneidenverschleiß Rechnung zu tragen. Hier ist ein Arbeitsprogramm innerhalb des Lageregelers vorgesehen, welches aufgrund der Reaktionskräfte, die beim Schneidvorgang in den Magnetlagern der Werkzeugspindel entstehen, ein Monitoring der Schneidkräfte beinhaltet und entsprechend der Erhöhung der Schnittkraft bei fortschreitendem Verschleiß eine Anpassung der auf die Werkzeugschneide projizierten Lage der Werkzeugspindel vornehmen kann.

Nachfolgend wird die Erfindung an drei Ausführungsbeispielen näher beschrieben. Es zeigen jeweils in stark vereinfachter, schematischer Darstellung
- Fig. 1: die Bearbeitung eines 4-Zylinder-Motorblocks im Längsschnitt,
- Fig. 2: die Bearbeitung des Motorblocks eines V-Motors im Querschnitt,
- Fig. 3: eine Werkzeugspindel und
- Fig. 4: ein Steuerungsschema.

Auf dem Spanntisch 1 einer Werkzeugmaschine ist ein Motorblock 2 eines 4-Zylinder-Reihenmotors aufgespannt. Die Werkzeugmaschine weist einen Werkzeugsupport 3 auf, der in den Richtungen 4 und 5 bewegbar ist. Die Bewegungsrichtung 4 ist senkrecht und die Bewegungsrichtung 5 waagerecht. Parallel zu - und im Abstand von einander sind auf dem Werkzeugsupport 3 zwei Gehäuse 6 und 7 befestigt. In den Gehäusen 6 und 7 ist jeweils eine Werkzeugspindel 8 und 9 motorisch antreibbar und drehbar magnetisch gelagert. Die Drehrichtungen sind durch die Pfeile 10 angedeutet.

Am äußeren Ende der Werkzeugspindeln 8 und 9, welche jeweils in die Zylinderbohrungen 11 und 12 des Motorblocks 2 eindringen, sind Bearbeitungswerkzeuge 13 und 14 vorgesehen. Bei den Bearbeitungswerkzeugen 13 und 14 handelt es sich jeweils um Drehmeißel mit geometrisch bestimmter Schneide 15. Der augenblickliche Zustand der Finishbearbeitung wird von den Schraubenlinien 16 dargestellt.

Während die Vorschubbewegung der Werkzeugspindeln 8 und 9 in der senkrechten Richtung 4 vom Werkzeugsupport 3 ausgeht, erfolgt die Vorschubbewegung der geometrisch bestimmten Schneiden 15 in der waagerechten Richtung +5 durch die magnetische Lagerung der Werkzeugspindeln 8 und 9 in den Gehäusen 6 und 7 über entsprechende Arbeitsprogramme. Die Vorschubbewegung in der waagerechten Richtung +5 erfolgt in zwei senkrecht zueinander stehenden Richtungen (nicht gezeigt), die orthogonal auf der Vorschubrichtung 4 stehen.

Nach Beendigung der Finishbearbeitung der Zylinderbohrungen 11 und 12 werden die Schneiden 15 zunächst in radialer Richtung -5 außer Eingriff gebracht und die Arbeitsspindeln 8 und 9 durch Aufwärtsbewegung 4 des Werkzeugssupports 3 aus den Zylinderbohrungen 11 und 12 herausgezogen. So dann erfolgt eine Verlagerung des Werkzeugssupports 3 in der waagerechten Richtung 5 und anschließend das gemeinsame Eintauchen der Werkzeugspindeln 8 und 9 in die noch zu bearbeitenden Zylinderbohrungen 17 und 18 des Motorblocks 2.

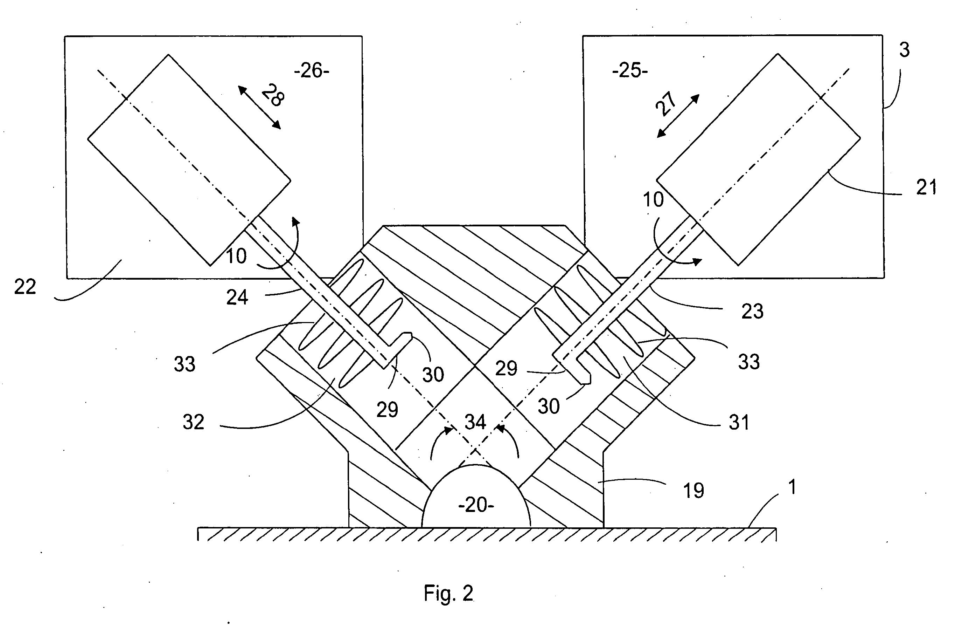

Fig. 2 zeigt den Motorblock 19 einer Verbrennungsmaschine in V-Zylinderanordnung. Der Motorblock 19 ist mit nach unten weisendem Kurbelgehäuse 20 auf dem Spanntisch 1 der Werkzeugmaschine befestigt. Zur Werkzeugmaschine gehört wiederum ein Werkzeugsupport 3, auf welchem zwei Gehäuse 21 und 22 unter einem rechten Winkel 34 zueinander angeordnet sind. In den Gehäusen 21 und 22 sind jeweils eine Werkzeugspindel 23 und 24 motorisch antreibbar und drehbar magnetisch gelagert. Entsprechend der V-Form des Motorblocks 19 können die beiden Gehäuse 21 und 22 auf den jeweiligen Teilen 25 und 26 des Werkzeugsupports 3 in den Richtungen 27 bzw. 28 und der Werkzeugsupport 3 wiederum in einer Richtung senkrecht zur Zeichenebene bewegt werden. Am äußeren Ende der Werkzeugspindeln 23 und 24 befindet sich jeweils ein Drehmeißel 29 mit geometrisch bestimmter Schneide 30. Der Arbeitsfortschritt innerhalb der Zylinderbohrungen 31 und 32 ist durch die Wellenlinien 33 dargestellt. Für die Bewegungen der Werkzeugspindeln 23 und 24 in den Bewegungsrichtungen 27 und 28 sowie senkrecht dazu gilt analog das Gleiche, wie bereits zur Fig.1 ausgeführt.

Die Vorschubbewegung der Werkzeugspindeln 23 und 24 in der Richtung senkrecht zu den Vorschubbewegungen 27 bzw. 28 erfolgt in zwei senkrecht zueinander stehenden Richtungen (nicht gezeigt) die jeweils orthogonal auf einer der Vorschubrichtungen 27 bzw. 28 stehen. Die orthogonale Bewegung der Werkzeugspindeln 23 und 24 erfolgt auch hierbei über deren jeweilige magnetische Lagerung.

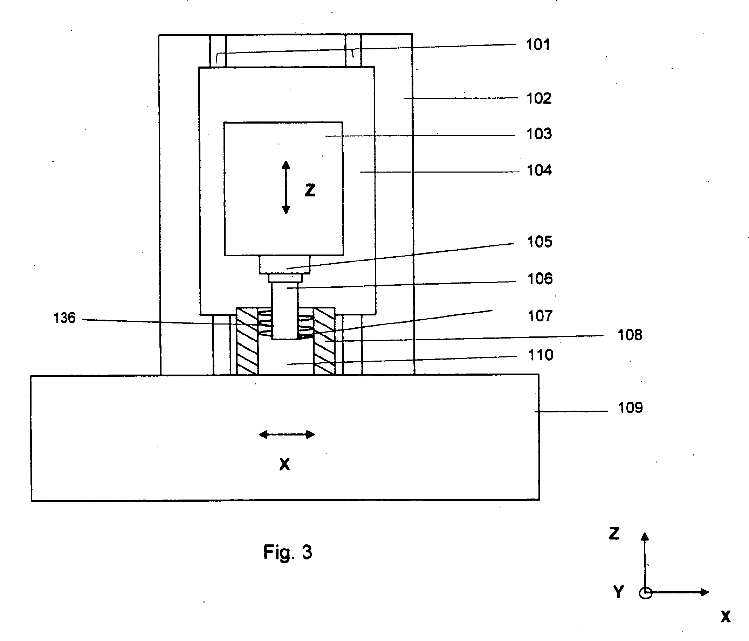

Fig. 3 zeigt einen Spanntisch 109 auf dem ein Maschinenständer (Support) 102 angeordnet ist. Der Support 102 wird in Führungen 101 eines Z-Schlittens 104 geführt. Der Maschinenständer 102 beherbergt das Gehäuse 103 einer Magnetspindel (nicht gezeigt). Der Z-Schlitten 104 ist in der Z-Richtung der Maschine (nicht gezeigt) bewegbar. Der Maschinenständer 102 ist in den Vorschubrichtungen X und Y bewegbar. In dem Gehäuse 103 ist eine Werkzeugspindel 105 magnetisch gelagert. Die Werkzeugspindel 105 tritt am unteren Ende aus dem Gehäuse 103 der Magnetspindel aus und trägt dort ein Werkzeug 106. Am äußeren Ende ist das Werkzeug 106 mit einer geometrisch definierten Werkzeugschneide 107 versehen. Mit dieser Werkzeugschneide 107 dringt das Werkzeug 106 in eine Bohrung 110 eines Werkstücks 108 ein. Das Werkstück 108 selbst ist auf einem Spanntisch 109 der Werkzeugmaschine (nicht gezeigt) befestigt. Bei der Bearbeitung der Bohrung 110 durch das Werkzeug 106 beschreibt die Werkzeugschneide 107 spiralförmige Linien, wie sie durch die Linien 136 angedeutet sind.

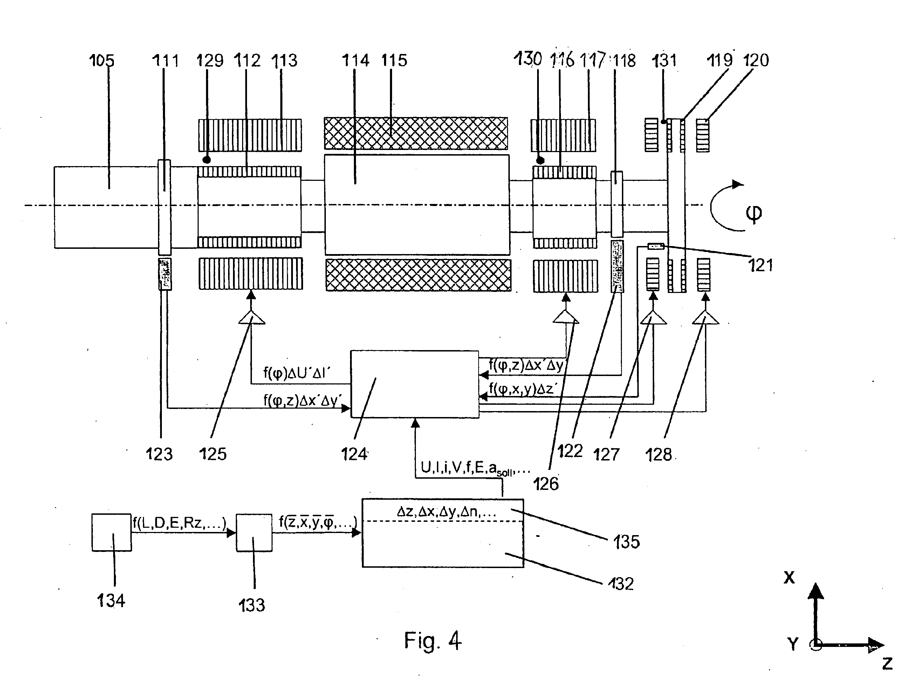

Fig. 4 beschreibt im Einzelnen und auch wiederum schematisch die Lagerung der Werkzeugspindel 105 innerhalb des Gehäuses 103 der Magnetspindel. Drehbar angetrieben wird die Werkzeugspindel 105 durch den Rotor 114 eines Antriebsmotors (nicht gezeigt), welcher in einem Stator 115 des Antriebsmotors drehbar angeordnet ist. Zur Lagerung des Antriebsmotors, bestehend aus dem Rotor 114 und dem Stator 115, dient ein Magnetlager 112 am Austritt der Werkzeugspindel 115 aus dem Gehäuse 103 und ein Magnetlager 116 im Inneren des Gehäuses 103 der Magnetspindel. Das Magnetlager 112 besteht aus einem Blechpaket, welches unmittelbar auf der Werkzeugspindel 105 befestigt ist und einem Stator 113 der als Traglager dient. Zwischen dem Blechpaket 112 und dem Stator 113 befindet sich ein Luftspalt 129. Das zweite Magnetlager 116 ist genauso aufgebaut. Zwischen einem Blechpaket des Traglagers 116 und dem Stator 117 befindet sich wiederum ein Luftspalt 130. Die Magnetlager 112 und 116 bilden die radiale Lagerung der Werkzeugspindel 105. Die axiale Lagerung der Werkzeugspindel 105 wird durch ein Magnetlager 119 bewirkt. Auch hier gibt es wieder einen axialen Stator 120 und einen Luftspalt 131 zwischen dem Stator 120 und dem Magnetlager 119.

Mit Hilfe von Radialsensoren 122 und 123 wird die radiale Lagerung der Werkzeugspindel 105 in dem Gehäuse 103 ermittelt. Zur Festlegung der Meßspuren dienen Traglagersensoren 111 und 118. Die axiale Lage der Werkzeugspindel 105 wird durch einen Axialsensor 121 ermittelt.

Die von den Radialsensoren 122 und 123 erfassten Werte der Radiallage der Werkzeugspindel 105 sowie die vom Axialsensor 121 erfasste Lage der Werkzeugspindel 105 in der Axialrichtung werden einem Lageregler 124 zugeführt. Der Lageregler 124 steht zugleich mit einer Korrekturwerttabelle 133 einem NC-Programm 134 einer Steuerung 132 der Maschine und einem PLC 135 in Verbindung. Werte des NC-Programms 134 der Korrekturwerttabelle 133, der Maschinensteuerung 132 und des PLC 135 werden vom Lageregler 134 über Leistungsverstärker 125, 126, 127 und 128 auf die Magnetlager 112, 116 und 119 der Lagerung der Werkzeugspindel 105 übertragen. Die Lageregelung der Werkzeugspindel 105 ist in der Beschreibungseinleitung zur vorliegenden Anmeldung sowie in den Patentansprüchen 7 bis 14 ausführlich dargelegt.

### Bezugszeichenliste

- 1: Spanntisch
- 2: Motorblock
- 3: Werkzeugsupport
- 4: Bewegungsrichtung senkrecht
- 5: Bewegungsrichtung waagerecht
- 6: Gehäuse
- 7: Gehäuse
- 8: Werkzeugspindel
- 9: Werkzeugspindel
- 10: Drehrichtung
- 11: Zylinderbohrung
- 12: Zylinderbohrung
- 13: Bearbeitungswerkzeug
- 14: Bearbeitungswerkzeug
- 15: geometrisch bestimmte Schneide
- 16: Schraubenlinie
- 17: Zylinderbohrung
- 18: Zylinderbohrung
- 19: Motorblock
- 20: Kurbelgehäuse
- 21: Gehäuse
- 22: Gehäuse
- 23: Werkzeugspindel
- 24: Werkzeugspindel
- 25: Teil des Werkzeugsupports
- 26: Teil des Werkzeugsupports
- 27: Bewegungsrichtung
- 28: Bewegungsrichtung
- 29: Drehmeißel
- 30: geometrisch bestimmte Schneide
- 31: Zylinderbohrung
- 32: Zylinderbohrung
- 33: Bearbeitungszustand
- 34: rechter Winkel
- 101: Führungen Z-Schlitten
- 102: Maschinenständer (Support)
- 103: Gehäuse der Magnetspindel
- 104: Z-Schlitten
- 105: Werkzeugspindel
- 106: Werkzeug
- 107: Werkzeugschneide
- 108: Werkstück
- 109: Spanntisch
- 110: Bohrung im Werkstück
- 111: Meßspur Traglagersensor
- 112: Magnetlager-Blechpaket Traglager
- 113: Stator - Traglager
- 114: Rotor (Antriebsmotor)
- 115: Stator (Antriebsmotor)
- 116: Magnetlager-Blechpaket Steuerlager
- 117: Stator - Steuerlager
- 118: Meßspur Steuerlagersensor
- 119: Magnetlager-Blechpaket Axiallager
- 120: Stator - Axiallager
- 121: Axialsensor - Axiallager
- 122: Radialsensor - Steuerlager
- 123: Radialsensor - Traglager
- 124: Lageregler
- 125: Leistungsverstärker Traglager
- 126: Leistungsverstärker Steuerlager
- 127: Leistungsverstärker vorderes Axiallager
- 128: Leistungsverstärker hinteres Axiallager
- 129: Luftspalt Traglager.
- 130: Luftspalt Steuerlager
- 131: Luftspalt vorderes Axiallager
- 132: Steuerung Maschine
- 133: Korrekturwerttabellen
- 134: NC-Programm
- 135: PLC
- 136: Bearbeitungsverlauf

### Erläuterungen zu den Formelzeichen

- U: Spannung
- I: Strom
- ϕ: Drehwinkel der Werkzeugspindel
- z: senkrechte Position der Werkzeugspindel
- x: Position der Werkzeugspindel waagerecht der Koordi- nate
- y: Position der Werkzeugspindel orthogonal zu x
- i: Bahnkurve Werkzeugspindel
- V: Schnittgeschwindigkeit
- f: Vorschub
- aₛₒₗₗ: Schnitttiefe Sollwert
- E: E-Modul
- Δx: Weg zwischen den x-Endanschlägen Δ y Weg zwischen den y-Endanschlägen
- Δz: Weg zwischen den z-Endanschlägen
- Δn: Drehzahlbereich Werkzeugspindel
- ϕ̅: Drehwinkelfehler der Werkzeugspindel
- z̅: Geometriefehler senkrechte Position Werkzeugspindel
- x̅: Geometriefehler Position Werkzeugspindel waagerecht der Koordinate
- y̅: Geometriefehler Position Werkzeugspindel orthogonal zu x

## Patentansprüche

1. Verfahren zur Finishbearbeitung von Zylinderbohrungen (11, 12, 17, 18) durch spanabhebende Bearbeitung auf einer Werkzeugmaschine, die einen Werkzeugsupport (3) aufweist, der wenigstens in einer Vorschubrichtung (4) bewegbar ist, indem man die Finishbearbeitung mit einem Schneidwerkzeug (13, 14) vornimmt, das eine geometrisch bestimmte Schneide (15) aufweist und am äußeren Ende einer Werkzeugspindel (8, 9) vorgesehen ist, die motorisch antreibbar drehbar in einem Gehäuse (6, 7) magnetisch gelagert ist, das auf dem Werkzeugsupport (3) befestigt ist, indem man die Bewegung des Schneidwerkzeugs (13, 14) in einer Richtung orthogonal zur Vorschubrichtung (4) in die Spindel (8, 9) verlagert und die Vorschubbewegung der Werkzeugspindel in der orthogonalen Richtung über deren magnetische Lagerung im Gehäuse (6, 7) vornimmt, wobei man die Schnittkräfte an der Schneide (15) anhand der Auflagerreaktionen der magnetischen Lagerung der Werkzeugspindel erfasst und die Schneide in Abhängigkeit vom Schneidkantenverschleiß nachführt, die Schneide (15) nach der Finishbearbeitung in orthogonaler Richtung zur Vorschubrichtung (4) über die magnetische Lagerung der Spindel außer Eingriff bringt und die Spindel danach entgegen der Vorschubrichtung mit Hilfe des Werkzeugsupports (3) aus der Zylinderbohrung (11, 12, 17, 18) herauszieht.

2. Werkzeugmaschine zur Finishbearbeitung von Zylinderbohrungen durch spanabhebende Bearbeitung mit einem Schneidwerkzeug (13, 14, 29) mit geometrisch bestimmter Schneide (15, 30), wobei die Werkzeugmaschine wenigstens einen Werkzeugsupport (3, 25, 26) aufweist, der wenigstens in und entgegen der Vorschubrichtung (4, 27, 28) einer Werkzeugspindel (8, 9, 23, 24) bewegbar ist, wobei
- auf dem Werkzeugsupport (3, 25, 26) ein Gehäuse (6, 7, 21, 22) fest angeordnet ist, in welchem
- eine Werkzeugspindel (8, 9, 23, 24) motorisch antreibbar drehbar magnetisch gelagert ist, an deren
- äußeren Ende das Schneidwerkzeug (13, 14, 29), angeordnet ist, und
- Sensoren an den magnetischen Lagern der Werkzeugspindel (8, 9, 23, 24) im Gehäuse (6, 7, 21, 22) vorgesehen sind, welche die Raum- und die Drehwinkellage der Werkzeugspindel (8, 9, 23, 24) jeweils erfassen und
- mit einer Regelung sowie kombinierten Programmsteuerung verbunden sind, über welche die Lage der Werkzeugspindel (8, 9, 23, 24) in der Vorschubrichtung (4, 27, 28) sowie orthogonal (5) dazu beeinflussbar ist, wobei weiterhin über die Sensoren an der magnetischen Lagerung der Werkzeugspindel (8, 9, 23, 24), die Bestimmung der jeweiligen Schnittkraft an der Schneide (15, 30) durchführbar ist (Schnittkraftmonitoring).

3. Werkzeugmaschine nach Anspruch 2,
**dadurch gekennzeichnet,**
**dass** die Werkzeugspindel (8, 9, 23, 24), senkrecht, waagerecht oder in beliebigen Winkellagen dazwischen angeordnet ist.

4. Werkzeugmaschine nach Anspruch 2,
**dadurch gekennzeichnet,**
**dass** über die Programmsteuerung die Schneide (15, 30) außer Eingriff bringbar ist.

5. Werkzeugmaschine nach Anspruch 2,
**dadurch gekennzeichnet,**
**dass** über die Programmsteuerung beliebige geometrische Querschnittskonturen an und längs der Zylinderbohrungen (11, 12, 17, 18, 31, 32) erzeugbar sind.

6. Verfahren zur spanenden Finishbearbeitung von Bohrungen (110) mit geometrisch definierter werkzeugschneide (107) auf einer Werkzeugmaschine mit mindestens einem Support (102), der wenigstens in einer Vorschubrichtung (X, Y, Z) bewegbar ist, eine motorisch antreibbare, drehbar in einem Gehäuse (103) magnetisch gelagerte Werkzeugspindel (105) aufweist, die eine Aufnahme zur Befestigung eines Werkzeuges (106) an deren äußeren Ende hat, wobei die Bewegungsbahn der Werkzeugschneide (107) durch ein hybrides Steuerungssystem (124, 132, 133, 134, 135) während der Bearbeitung erzeugt wird und das hybride Steuerungssystem (124, 132, 133, 134, 135) aus der Maschinensteuerung (132) und dem Lageregler (124) der magnetisch gelagerten Werkzeugspindel (105) besteht, wobei eine Bewegungsteilung zwischen der Maschinensteuerung (132) zur Absicherung der Grundbewegung und dem Lageregler (124) zur Absicherung der Präzisionsausrichtung mit bis zu sechs Freiheitsgraden in der Art erfolgt, dass die Grundbewegung mit Hilfe der verfahrbaren Maschinenachsen (X, Y, Z) erzeugt wird und die Präzisionsausrichtung zur Einstellung der erforderlichen Schnitttiefe mit Hilfe des Lagereglers (124) durch Änderung der Luftspalte (129, 130, 131) der Magnetlager (112, 116, 118) dazu überlagert erfolgt.

7. Verfahren nach Anspruch 6,
**dadurch gekennzeichnet,**
**dass** der Lageregler (124) der magnetisch gelagerten Werkzeugspindel (105) Sollwerte der Maschinensteuerung (132) wie Schnitttiefe und/oder Vorschub und/oder Schnittgeschwindigkeit und/oder Grundbewegung der jeweils zu bearbeitenden geometrischen Form, sowie die Toleranzen, die Leistungsaufnahme des Antriebsmotors (114, 115) der Werkzeugspindel (105) und weiterer Parameter, beispielsweise Werkstücktemperatur erhält und In-Prozess Ist-Werte zur Präzisionsausrichtung der Rotationsachse der Werkzeugspindel (105) im Raum abruft unter Beachtung der axial und radial abgerufenen Signale der Sensoren (121, 122, 123) und durch die Leistungsverstärker (125, 126, 127, 128) für jedes axiale und radiale Magnetlager (112, 116, 119) die erforderlichen Leistungsparameter separat und drehwinkelbezogen einstellt.

8. Verfahren nach Anspruch 6 und 7,
**dadurch gekennzeichnet,**
**dass** für die Ermittlung der Toleranzen die Geometrieabweichungen der bearbeitungsrelevanten Verfahrwege der Maschine in Abhängigkeit vom Verfahrweg in Z-Richtung ermittelt, und in Form einer Korrekturwerttabelle zusammengefasst und in dieser Form in der Maschinensteuerung (132) abgelegt werden.

9. Verfahren nach Anspruch 6 bis 8,
**dadurch gekennzeichnet,**
**dass** die Bemessung der Luftspalte (129, 130, 131) der Magnetlager (112, 116, 119) unter Beachtung der zu bearbeitenden Werkstücke (118), des prognostizierten Maschinen- und Werkzeugverschleißes, der relevanten maximal auftretenden fertigungsbedingten Geometriefehler der Maschine bezüglich der Genauigkeit der Achsenpositionierung sowie weiterer Parameter, beispielsweise thermischer Einflüsse, erfolgt.

10. Verfahren nach Anspruch 6 bis 9,
**dadurch gekennzeichnet,**
**dass** die Steuerung der Magnetfelder der Magnetlager (112, 116, 119 in Echtzeit in Abhängigkeit der existierenden Schnittkräfte durch Übergabe des Parameters Leistungsaufnahme des Werkzeugspindelmotors (114, 115) der Maschinensteuerung (132) an den Lageregler (124) erfolgt und eine Ortverlagerung der Werkzeugschneide (107) in bis zu sechs Freiheitsgraden erzeugt.

11. Verfahren nach Anspruch 6 bis 10,
**dadurch gekennzeichnet,**
**dass** die Werkzeugschneide (107) nach Abschluß der Finishbearbeitung in Richtung Achsmitte der Bohrung (110) durch den Lageregler (124) außer Eingriff gebracht und anschließend das Werkzeug (106) entgegen der Vorschubrichtung (X, Y) mit Hilfe des Supports (102) aus der Zylinderbohrung herausgefahren wird.

12. Verfahren nach Anspruch 6 bis 11,
**dadurch gekennzeichnet,**
**dass** zur Finishbearbeitung eine oder mehrere Vorrichtung(en) zur Erzeugung einer Vorspannung am Werkstück (108) verwendet werden.

13. Verfahren nach Anspruch 6 bis 12,
**dadurch gekennzeichnet,**
**dass** die Maschine aus einer oder mehreren in ihrer Lage und Anordnung an der Maschine frei wählbaren weiteren magnetischen gelagerten Werkzeugspindeln (106) besteht, welche nach einem der Ansprüche 1 bis 6 angesteuert werden.

## Claims

1. A method for the finish machining of cylinder bores (11, 12, 17, 18) by machining on a machine tool which has a toolhead (3) which is movable in at least one feed direction (4) and by carrying out the finish machining with a cutting tool (13, 14) which has a geometrically defined cutting edge (15) and is provided at the outer end of a tool spindle (8, 9) which is motor-driven and magnetically mounted in a rotatable manner in a housing (6, 7) which is fastened to the toolhead (3), and by shifting the movement of the cutting tool (13, 14) in a direction orthogonally to the feed direction (4) into the spindle (8, 9) and carrying out the feed movement of the tool spindle in the orthogonal direction via the magnetic bearing of the same in the housing (6, 7), wherein the cutting forces at the cutting edge (15) are detected by means of the support reaction of the magnetic bearing of the tool spindle and the cutting edge is repositioned depending on the cutting edge wear, the cutting edge (15) is disengaged after the finish machining via the magnetic bearing of the spindle in the direction orthogonal to the feed direction (4) and subsequently, the spindle is retracted in the direction opposite to the feed direction from the cylinder bore (11, 12, 17, 18) by means of the toolhead (3).

2. A machine tool for the finish machining of cylinder bores by machining with a cutting tool (13, 14, 29) with a geometrically defined cutting edge (15, 30), wherein the machine tool has at least one toolhead (3, 25, 26) which is movable at least in and opposite to the feed direction (4, 27, 28) of a tool spindle (8, 9, 23, 24), wherein
- on the toolhead (3, 25, 26), a housing (6, 7, 21, 22) is fixedly arranged, in which
- a tool spindle (8, 9, 23, 24) is magnetically mounted and motor-driven in a rotatable manner, at
- the outer end of which, the cutting tool (13, 14, 29) is arranged, and
- sensors are provided on the magnetic bearings of the tool spindles (8, 9, 23, 24) in the housing (6, 7, 21, 22) which detect in each case the spatial and the rotational angle position of the tool spindle (8, 9, 23, 24), and
- which are connected to a feedback control and combined program control via which the position of the tool spindle (8, 9, 23, 24) can be influenced in the feed direction (4, 27, 28) and orthogonally (5) thereto, wherein, furthermore, the determination of the respective cutting force at the cutting edge (15, 30) (cutting force monitoring) can be carried out via the sensors on the magnetic bearing of the tool spindle (8, 9, 23, 24).

3. The machine tool according to claim 2,
**characterized in**
**that** the tool spindle (8, 9, 23, 24) is arranged vertically, horizontally or in any intermediate angular positions.

4. The machine tool according to claim 2,
**characterized in**
**that** the cutting edge (15, 30) can be disengaged via the program control.

5. The machine tool according to claim 2,
**characterized in**
**that** any geometrical cross-sectional contour can be generated on and along the cylinder bores (11, 12, 17, 18, 31, 32) via the program control.

6. A method for the finish machining of boreholes (110) with a geometrically defined tool cutting edge (107) on a machine tool with at least one machine support (102) which is movable at least in one feed direction (X, Y, Z), which has a motor-driven tool spindle (105) which is magnetically mounted in a rotatable manner in a housing (103) and which has a tool holder at its outer end for attaching a tool (106), wherein the movement path of the tool cutting edge (107) is generated during machining by a hybrid control system (124, 132, 133, 134, 135) and the hybrid control system (124, 132, 133, 134, 135) consists of the machine control (132) and the position controller (124) of the magnetically mounted tool spindle (105), wherein a separation of movement between the machine control (132) for securing the basic movement and the position controller (124) for securing the precision alignment with up to six degrees of freedom takes place in such a manner that the basic movement is generated by means of the movable machine axes (X, Y, Z) and the precision alignment for adjusting the required cutting depth takes place superimposed thereto by means of the position controller (124) by changing the air gaps (129, 130, 131) of the magnetic bearings (112, 116, 118).

7. The method according to claim 6,
**characterized in**
**that** the position controller (124) of the magnetically mounted tool spindle (105) receives set values from the machine control (132) such as cutting depth and/or feed and/or cutting speed and/or basic movement of the respective geometrical shape to be machined as well as tolerances, the power consumption of the drive motor (114, 115) of the tool spindle (105) and further parameters, for example workpiece temperature, and retrieves in-process actual values for the spatial precision alignment of the rotational axis of the tool spindle (105) in consideration of the axially and radially retrieved signals of the sensors (121, 122, 123), and adjusts the required performance parameters separately and with respect to the rotational angle for each axial and radial magnetic bearing (112, 116, 119) by means of the power amplifiers (125, 126, 127, 128).

8. The method according to claim 6 and claim 7,
**characterized in**
**that** for determining the tolerances, the geometry deviations of the machine's traverse paths relevant for machining are determined as a function of the traverse path in the Z-direction and are summarized in the form of a table of correction values and are stored in said form in the machine control (132).

9. The method according to the claims 6 to 8,
**characterized in**
**that** the dimensioning of the air gaps (129, 130, 131) of the magnetic bearings (112, 116, 119) takes place in consideration of the workpieces (118) to be machined, the prognosticated machine and tool wear, the relevant, maximum manufacturing-related geometrical errors of the machine with respect to the accuracy of the axis positioning, as well as other parameters, for example, thermal influences.

10. The method according to the claims 6 to 9,
**characterized in**
**that** controlling the magnetic fields of the magnetic bearings (112, 116, 119) takes place in real-time as a function of the existing cutting forces by transmitting the parameter power consumption of the tool spindle motor (114, 115) of the machine control (132) to the position controller (124) and generates a positional shift of the tool cutting edge (107) in up to six degrees of freedom.

11. The method according to the claims 6 to 10,
**characterized in**
**that** after completion of the finish machining, the tool cutting edge (107) is disengaged towards the axial center of the borehole (110) by the position controller (124) and subsequently, the tool (106) is moved opposite to the feed direction (X, Y) and out of the cylinder bore by means of the machine support (102).

12. The method according to the claims 6 to 11,
**characterized in**
**that** for finish machining, one or more devices are used for generating a preload on the workpiece (108).

13. The method according to the claims 6 to 12,
**characterized in**
**that** the machine consists of one or more further magnetically mounted tool spindles (106) which are freely selectable with respect to position and arrangement on the machine and which are controlled according to any one of the claims 1 to 6.

## Revendications

1. Procédé destiné à l'usinage de finition d'alésages de cylindres (11, 12, 17, 18) par un usinage par enlèvement de copeaux sur une machine-outil qui présente un support d'outil (3) mobile au moins dans un sens d'avancement (4), en ce que l'on effectue l'usinage de finition avec un outil de coupe (13, 14) qui présente une lame (15) définie géométriquement et qui est prévue sur l'extrémité extérieure d'une tige d'outil (8, 9) qui peut être entraînée en rotation par un moteur en étant placée magnétiquement dans un boîtier (6, 7), lequel est fixé sur le support d'outil (3), en ce que l'on transfère le mouvement de l'outil de coupe (13, 14) dans un sens orthogonal au sens d'avancement (4) dans la tige (8, 9) et que l'on effectue le mouvement d'avancement de la tige d'outil dans le sens orthogonal par son placement magnétique dans le boîtier (6, 7), sachant que l'on détecte les forces de coupe sur la lame (15) à l'aide des réactions sur les appuis du placement magnétique de la tige d'outil et que l'on guide la lame en fonction de l'usure de l'arête de coupe, que l'on met la lame (15) hors de prise après l'usinage de finition dans le sens orthogonal vers le sens d'avancement (4) par le placement magnétique de la tige et que l'on sort ensuite la tige hors de l'alésage de cylindre (11, 12, 17, 18) contre le sens d'avancement à l'aide du support d'outil (3).

2. Machine-outil pour l'usinage de finition d'alésages de cylindres par un usinage par enlèvement de copeaux avec un outil de coupe (13, 14, 29) qui présente une lame (15, 30) définie géométriquement, sachant que la machine-outil présente au moins un support d'outil (3, 25, 26) mobile au moins dans et contre le sens d'avancement (4, 27, 28) d'une tige d'outil (8, 9, 23, 24), sachant que
- un boîtier (6, 7, 21, 22) est placé fixement sur le support d'outil (3, 25, 26), dans lequel
- une tige d'outil (8, 9, 23, 24) est placée magnétiquement en pouvant être entraînée en rotation par un moteur sur
- l'extrémité extérieure de laquelle, l'outil de coupe (13, 14, 29) est placé, et
- des capteurs sont prévus sur les paliers magnétiques de la tige d'outil (8, 9, 23, 24) dans le boîtier (6, 7, 21, 22) qui détectent respectivement les positions angulaires spatiales et en rotation de la tige d'outil (8, 9, 23, 24) et
- sont reliés à un réglage ainsi qu'à une commande de programme combinée par le biais de laquelle la position de la tige d'outil (8, 9, 23, 24) dans le sens d'avancement (4, 27, 28) et orthogonal (5) peut être influencée, sachant qu'en outre on peut déterminer la force de coupe respective sur la lame (15, 30) (monitoring de force de coupe) par les capteurs sur les paliers magnétiques de la tige d'outil (8, 9, 23, 24).

3. Machine-outil selon la revendication 2,
**caractérisée en ce que**
la tige d'outil (8, 9, 23, 24) est placée verticalement, horizontalement ou dans des positions angulaires au choix entre les deux.

4. Machine-outil selon la revendication 2,
**caractérisée en ce que**
la lame (15, 30) peut être mise hors de prise par la commande de programme.

5. Machine-outil selon la revendication 2,
**caractérisée en ce que**
des contours géométriques de section transversale au choix sur et le long des alésages de cylindres (11, 12, 17, 18, 31, 32) peuvent être produits par la commande de programme.

6. Procédé destiné à l'usinage de finition par enlèvement de copeaux d'alésages (110) avec une lame d'outil (107) définie géométriquement sur une machine-outil comprenant au moins un support (102) mobile au moins dans un sens d'avancement (X, Y, Z), qui présente une tige d'outil (105) placée magnétiquement dans un boîtier (103) en pouvant être entraînée en rotation par un moteur, laquelle possède un logement pour fixer un outil (106) sur son extrémité extérieure, sachant que le trajet de déplacement de la lame d'outil (107) est produit pendant l'usinage par un système de commande hybride (124, 132, 133, 134, 135) et que le système de commande hybride (124, 132, 133, 134, 135) est composé de la commande de machine (132) et du régulateur de palier (124) de la tige d'outil (105) placée magnétiquement, sachant qu'une division de mouvement entre la commande de machine (132), pour sécuriser le mouvement de base, et le régulateur de palier (124), pour sécuriser l'alignement de précision avec jusqu'à six degrés de liberté, s'effectue de telle manière que le mouvement de base est produit à l'aide des axes mobiles de la machine (X, Y, Z) et que l'alignement de précision pour régler la profondeur de coupe nécessaire est effectué en étant superposé à cela, à l'aide du régulateur de palier (124) par une modification de la discontinuité magnétique (129, 130, 131) des paliers magnétiques (112, 116, 118).

7. Procédé selon la revendication 6,
**caractérisé en ce que**
le régulateur de palier (124) de la tige d'outil (105) placée magnétiquement obtient des valeurs de consigne de la commande de machine (132) comme la profondeur de coupe et/ou l'avancement et/ou la vitesse de coupe et/ou le mouvement de base de la forme géométrique respective à usiner, ainsi que les tolérances, la puissance absorbée du moteur d'entraînement (114, 115) de la tige d'outil (105) et des paramètres supplémentaires, par exemple la température de la pièce, et appelle des valeurs réelles en cours de procédé pour l'alignement de précision de l'axe de rotation de la tige d'outil (105) dans l'espace, en tenant compte des signaux appelés axialement et radialement des capteurs (121, 122, 123) et règle par les amplificateurs de puissance (125, 126, 127, 128) les paramètres de puissance nécessaires séparément et par rapport à l'angle de rotation pour chaque palier magnétique axial et radial (112, 116, 119).

8. Procédé selon les revendications 6 et 7,
**caractérisé en ce que**
pour le calcul des tolérances, les écarts de géométrie des trajets de déplacement de la machine destinés à l'usinage sont calculés en fonction du trajet de déplacement dans le sens Z et réunis sous forme d'un tableau de valeurs de correction et placés sous cette forme dans la commande de la machine (132).

9. Procédé selon les revendications 6 à 8,
**caractérisé en ce que**
la mesure de la discontinuité magnétique (129, 130, 131) des paliers magnétiques (112, 116, 119) a lieu en tenant compte des pièces à usiner (118), de l'usure de la machine et de l'outil pronostiquée, des erreurs maximales de géométrie de la machine dues à la production qui se produisent par rapport à la précision du positionnement des axes ainsi que des paramètres supplémentaires, par exemple, les influences thermiques.

10. Procédé selon les revendications 6 à 9,
**caractérisé en ce que**
la commande des champs magnétiques des paliers magnétiques (112, 116, 119) a lieu en temps réel en fonction des forces de coupe existantes en transmettant le paramètre de puissance absorbée du moteur de la tige d'outil (114, 115) de la commande de machine (132) au régulateur de palier (124) et produit un déplacement de la lame d'outil (107) avec jusqu'à six degrés de liberté.

11. Procédé selon les revendications 6 à 10,
**caractérisé en ce que**
la lame d'outil (107) est mise hors de prise par le régulateur de palier (124) une fois l'usinage de finition terminé en direction du centre de l'axe de l'alésage (110) et enfin, l'outil (106) est sorti de l'alésage de cylindre contre le sens d'avancement (X, Y) à l'aide du support (102).

12. Procédé selon les revendications 6 à 11,
**caractérisé en ce que**
pour l'usinage de finition, on emploie un ou plusieurs dispositif(s) pour produire une précontrainte sur la pièce (108).

13. Procédé selon les revendications 6 à 12,
**caractérisé en ce que**
la machine est composée d'une ou plusieurs tige(s) d'outil (106) supplémentaire(s) placées magnétiquement et dont la position et l'agencement peuvent être choisis librement sur la machine, lesquelles sont commandées selon l'une des revendications 1 à 6.
